# EUROPEAN PATENT SPECIFICATION

(11) **EP 0 498 299 B1**
(45) Date of publication and mention of the grant of the patent: **05.10.1994**
(21) Application number: 92101520.2
(22) Date of filing: 30.01.1992
(51) Int. Cl.: B60B 27/00, G01P 3/44

(54) **A couple of protective caps for revolving speed gauging devices**
Schutzkappen für Drehgeschwindigkeitsmesseinrichtungen
Capuchons de protection pour dispositif de jaugeage de vitesse de rotation

(30) Priority: 08.02.1991 IT TO910035 U
(43) Date of publication of application: 12.08.1992
(73) Proprietor: SKF INDUSTRIE S.P.A., I-10123 Torino (IT)
(72) Inventor: Vignotto, Angelo, I-10134 Torino (IT); Genero, Matteo, I-10021 Cambiano (Torino) (IT); Moretti, Roberto, I-10020 Cambiano (Torino) (IT)
(74) Representative: Lotti, Giorgio

(56) References cited:
- EP-A- 0 317 423
- EP-A- 0 323 159
- EP-A- 0 343 058
- DE-A- 2 815 140

## Description

This invention relates to a couple of protective caps for devices for gauging the revolving speed between two members in relative rotation such as the supporting members of a wheel.

Special control circuits for installation on vehicles are already diffuse, such as the ones known as:
- ABS, that have the aim of preventing the vehicle's wheels from blocking during the braking;
- ASR, that are meant to control the correct traction of the vehicle;
- speed gauging devices, such as speedometers;
- distance gauging devices, such as mileometers.

The gauging systems that are actually used are realized with common basic components, such as: phonic wheel, gauging sensor, local processing unit and oleodynamic shunt connection unit.

The phonic wheel is usually a toothed ring that is mounted on the rotating part to be kept under control while the sensor, may it be active or passive, is installed on the chassis facing the toothed part of the phonic ring at a prearranged distance.

The electric signals coming from the single sensors are sent to the local processing unit that gauges, in the case of ABS systems, the differences between the revolving speeds of the wheels.

The passive kind of sensors that are actually used measure the reluctance variations and need no power supply; anyway, these sensors necessarily have to be mounted outside the bearing. Thus, they are located in a position that is not protected from eventual crashes, polluting agents and other dangerous damages.

In particular, this sensor is negatively affected by the metallic particles due to the wear of the brakes that are located nearby the sensors and by the high temperatures produced by the brake disks. Moreover, the sensors need a proper adjustment to be done by the user during the assembling.

The active kind of sensors, instead, are usually inductive, are realized with a small power supplied coil by an oscillatory circuit or by members that are sensitive to the variation of magnetic fields (Hall effect).

These sensors can be fitted within the wheel hearing and therefore protected, but need an external power supply. A related device is described in EP-A-0 317 423.

It is an object of the present invention to provide a device which features the ability of protecting the gauging members, effectively enabling an easy and reliable connection between these and the local processing unit. The sensor has to be protected by external polluting agents, and the electronics have to be repaired from crashes and located as far as possible from noxious heat sources.

With the above and other objects in view which will appear as the description proceeds, this invention resides in a novel construction, combination and arrangement of parts substantially as hereinafter described and more particularly defined by the appended claims, it being understood that such changes in the precise embodiment of the herein disclosed invention may be made as come within the scope of the claims.

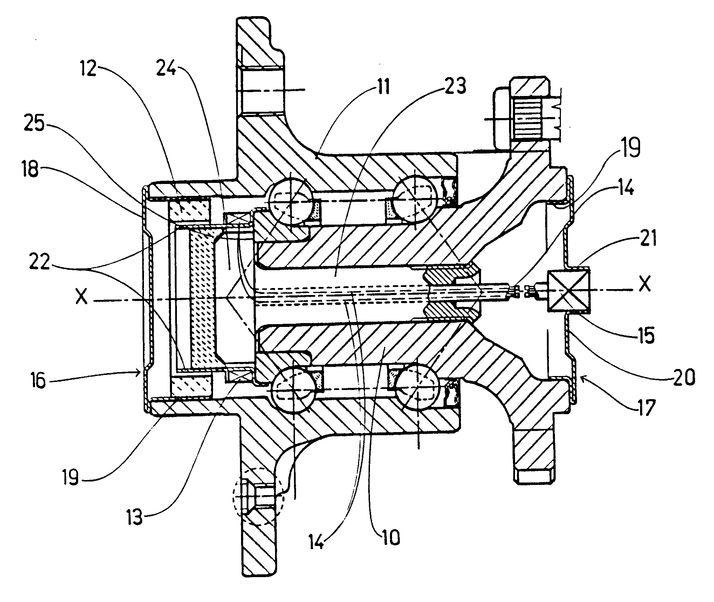

The accompanying drawing illustrates one complete example of the physical embodiment of the invention constructed according to the best moade so far devised for the practical application of the principles thereof.

The drawing is an axial sectional view of a bearing on which a couple of caps of the invention are installed.

Referring to the drawing, the outer race 11 is the revolving part of the bearing, while the inner race 10 is the fixed part.

Reference is made to an example in which the gauging sensor is of the passive kind, but it is understood that the device according to the present invention can be successfully applied with active sensors, in which case the gauging unit will be different.

The device for gauging the revolving speed of the outer race 11 is composed by a rotating phonic wheel 12 and a gauging coil 13 that is wound around a flux concentrator 22, cylindrical in shape.

The flux concentrator 22 is disposed axially and is forcedly fitted on the inner fixed race 10. The coil 13 is electrically connected to a processing unit (not shown) via cables 14 which end in a connector 14 centered on the rotation axis X of the bearing.

The phonic wheel 12 is fixed within the rotating race 11 by means of an outer cap 16 that together with an inner cap 17 forms the object of the present invention.

The outer cap 16 is made up of a substantially disk-like base 18, perpendicular with respect to the axis X, and an axially disposed cylindrical portion 19, interposed between the outer race 11 and the phonic wheel 12.

The cap 17 that faces the inside of the vehicle, is instead suitably shaped and fixed onto the inner fixed race 10 of the bearing. Cap 17 has a base 20, in the centre of which an opening is obtained with a cylindrical edge 21. This edge is disposed axially and has the purpose of receiving and holding firmly the connector 15.

The couple of caps 16 and 17 can be advantageously made out of a plastic material, or of a light alloy metal.

The cables 14 departing from coil 13 pass through a sleeve 23 coaxially disposed inside the race 10.

The sleeve 23 is equipped with an outer head 24 abutting the outer face 25 of the race 10. The main function of said sleeve is to maintain the cables 14 going towards connector 15 in a centered position on axis X, so as to give such electrical connection the necessary steadiness.

By installing a couple of caps according to this invention, the whole sensor is contained within the bearing, whereby the speed gauging device is well repaired from metal particles caused by the wear of the brake linings that are near the bearing.

Moreover, the caps form a barrier for high temperatures produced by the brake disks.

During assembling, the bearing can be mounted separately and equipped with the gauging device before it is fitted on the wheel of the vehicle.

It can also be appreciated that the couple of caps of this invention have the further advantage of preventing the gauging sensor and its cables from damage during the assembly of the bearing.

## Claims

1. A couple of protective caps (16,17) for devices for gauging the revolving speed between two members in relative rotation such as the supporting members of a wheel, characterized in that they are each formed by a substantially disk-like base (18, 20) perpendicular with respect to the axis (X) of the wheel and that they both have an axially disposed cylindrical edge portion (19) extending from the periphery of the base (18, 20); said cylindrical edge portions (19) being forcedly fitted, when mounted, in the projecting ends of the outer rotating race (11) and the inner fixed race (10) of the bearing, respectively.

2. A couple of caps according to claim 1 characterized in that the cap (17) that is fitted on the fixed race (11) of the bearing is provided with a central opening with an axially disposed cylindrical edge (21) wherein a connector (15) is inserted; said connector (15) receiving the cables (14) from the gauging device and being connected to a local processing unit.

3. A couple of caps according to claim 1, characterized in that a phonic wheel (12) of the gauging device is mounted within the cylindrical edge (19) of the cap (16) that is forcedly fitted on the bearing's rotating race (11).

4. A couple of caps according to claim 1 characterized in that the speed gauging device is of the kind comprising a phonic wheel (12) and a gauging sensor (13) of the passive kind.

5. A couple of caps according to claim 1 characterized in that the speed gauging device is of the kind comprising a phonic wheel (12) and a gauging sensor (13) of the active kind.

## Patentansprüche

1. Schutzkappenpaar (16, 17) für Einrichtungen zum Messen der Drehgeschwindigkeit zwischen zwei Elementen in relativer Rotation, wie z.B. die Lagerelemente eines Rades,
dadurch gekennzeichnet, daß jede durch eine im wesentlichen scheibenförmige Basis (18, 20) gebildet wird, die senkrecht bezüglich der Achse (X) des Rades ist und daß beide einen axial angeordneten zylindrischen Kantenabschnitt (19) aufweisen, der sich von dem Umfang der Basis (18, 20) erstreckt; daß die zylindrischen Kantenabschnitte (19) mit einer Preßpassung befestigt sind, sobald diese in den vorstehenden Enden des rotierenden äußeren Ringes (11) bzw. des inneren feststehenden Ringes (10) des Lagers montiert werden.

2. Schutzkappenpaar nach Anspruch 1,
dadurch gekennzeichnet, daß die Schutzkappe (17), die auf dem feststehenden Ring (11) des Lagers befestigt ist, mit einer zentralen Öffnung versehen ist, mit einer axial angeordneten zylindrischen Kante (21), in der ein Verbinder (15) eingesteckt ist, wobei der Verbinder (15) die Kabel (14) von der Meßvorrichtung aufnimmt und mit einer lokalen Prozessoreinheit verbunden ist.

3. Schutzkappenpaar nach Anspruch 1,
dadurch gekennzeichnet, daß ein phonisches Rad (12) der Meßvorrichtung innerhalb der zylindrischen Kanten (19) der Schutzkappe (16) montiert ist, die mit einer Preßpassung auf dem rotierenden Lagerring (11) befestigt ist.

4. Schutzkappenpaar nach Anspruch 1, dadurch gekennzeichnet, daß die Geschwindigkeitsmeßvorrichtung von der Art ist, welche ein phonisches Rad (12) und einen Meßsensor (13) der passiven Art enthält.

5. Schutzkappenpaar nach Anspruch 1,
dadurch gekennzeichnet, daß die Geschwindigkeitsmeßvorrichtung von der Art ist, welche ein phonisches Rad (12) und einen Meßsensor (13) der aktiven Art enthält.

## Revendications

1. Paire de couvercles de protection (16, 17) pour dispositifs de mesure de la vitesse de rotation entre deux éléments en rotation relative tels que les éléments support d'une roue, caractérisée en ce qu'ils sont chacun formés d'une embase essentiellement en forme de disque (18, 20), perpendiculaire à l'axe (X) de la roue, et en ce qu'ils possèdent tous deux une partie (19) constituée d'un rebord cylindrique disposé axialement et s'étendant à partir de la périphérie de l'embase (18, 20), lesdites parties constituées d'un rebord cylindrique (19) étant montées à force, lors du montage respectivement dans les extrémités saillantes de la bague extérieure (11) tournante et de la bague intérieure (10) fixe de l'essieu.

2. Paire de couvercles selon la revendication 1, caractérisée en ce que le couvercle (17) qui est monté sur la bague fixe (11) de l'essieu est muni d'une ouverture centrale avec un rebord cylindrique (21) disposé de façon axiale dans lequel est inséré un connecteur (15), ledit connecteur (15) recevant les câbles (14) venant du dispositif de mesure et étant relié à une unité de traitement locale.

3. Paire de couvercles selon la revendication 1, caractérisée en ce qu'une roue phonique (12) du dispositif de mesure est montée à l'intérieur du rebord cylindrique (19) du couvercle (16) qui est monté à force dans la bague tournante (11) de l'essieu.

4. Paire de couvercles selon la revendication 1, caractérisée en ce que le dispositif de mesure de vitesse est du type de ceux qui comprennent une roue phonique (12) et un détecteur (13) du type passif.

5. Paire de couvercles selon la revendication 1, caractérisée en ce que le dispositif de mesure de vitesse est du type de ceux comprenant une roue phonique (12) et un détecteur (13) du type actif.
